# EUROPEAN PATENT APPLICATION

(11) **EP 4 832 466 A1**
(43) Date of publication of application: **28.10.2026**
(21) Application number: 26170814.3
(22) Date of filing: 07.04.2026
(51) Int. Cl.: H04N 1/00

(54) **DOCUMENT CONVEYING DEVICE, IMAGE READING DEVICE AND IMAGE FORMING APPARATUS**

(30) Priority: 22.04.2025 JP 2025070164
(71) Applicant: KYOCERA Document Solutions Inc., Osaka-shi, Osaka 540-8585 (JP)
(72) Inventor: KAWAOKA, Ryo, Osaka, 540-8585 (JP)
(74) Representative: Becker Kurig & Partner Patentanwälte mbB

(57) **Abstract**

A document conveying device conveys a document in a predetermined conveying direction. The document conveying device includes a feeding tray, a support frame, and a cable. On the feeding tray, the document is placed. The support frame is disposed on one side of the feeding tray in a width direction and supports the feeding tray so as to be lifted and lowered. The cable electrically connects a first connection portion provided on the feeding tray and a second connection portion provided on the support frame. The support frame has an opening for penetrating the cable from the first connection portion to the second connection portion. The opening is formed to allow the cable to be lifted and lowered in conjunction with the feeding tray. The cable passes through the opening, curves along an outer surface of the support frame, and extends in one side in the conveying direction.

## Description

### BACKGROUND

The present disclosure relates to a document conveying device, an image reading device, and an image forming apparatus.

A sheet conveying device for conveying a sheet (document) placed on a feeding tray toward a discharge tray is known. The sheet conveying device is turned around a turning shaft with respect to an optical reading part. An electric cable for connecting the sheet conveying device and the optical reading part is supported by two fixed portions provided parallel to the turning shaft, and the electric cable between the two fixed portions is formed in a curved portion. The twisting of the electric cable caused by the opening and closing of the sheet conveying device is absorbed by the curved portion and the two fixing portions to reduce the stress on the electric cable.

### SUMMARY

A document conveying device according to the present disclosure conveys a document in a predetermined conveying direction. The document conveying device includes a feeding tray, a support frame, and a cable. On the feeding tray, the document is placed. The support frame is disposed on at least one side of the feeding tray in a width direction perpendicular to the conveying direction and supports the feeding tray so as to be lifted and lowered. The cable electrically connects a first connection portion provided on the feeding tray and a second connection portion provided on the support frame. The support frame has an opening for penetrating the cable from the first connection portion to the second connection portion in the width direction. The opening is formed to allow the cable to be lifted and lowered in conjunction with the feeding tray. The cable passes through the opening, curves along an outer surface of the support frame, and extends in one side of the conveying direction.

An image reading device according to the present disclosure includes the document conveying device, and a reading part which reads an image of the document conveyed by the document conveying device.

An image forming apparatus according to the present disclosure includes the image reading device.

### BRIEF DESCRIPTION OF THE DRAWINGS

FIG. 1 is a cross-sectional view (front view) showing an internal structure of an image forming apparatus according to one embodiment of the present disclosure.
FIG. 2 is a cross-sectional view showing a document conveying device according to the embodiment of the present disclosure.
FIG. 3 is a plan view showing a feeding tray of the document conveying device according to the embodiment of the present disclosure.
FIG. 4 is a rear view showing a part of the feeding tray disposed at an upper limit position in the document conveying device according to the embodiment of the present disclosure.
FIG. 5 is a rear view showing a part of the feeding tray disposed at a lower limit position in the document conveying device according to the embodiment of the present disclosure.

### DETAILED DESCRIPTION

Hereinafter, with reference to the attached drawings, one embodiment of the present disclosure will be described. Fr, Rr, L, R, U, and D in the drawings indicate the front, rear, left, right, upper, and down. The front-and-rear direction (width direction), the left-and-right direction (conveying direction), and the upper-and-down direction (lifting direction) are orthogonal to each other. Although the directional and positional terms are used in the specification, they are used for convenience of description and are not intended to limit the scope of the disclosure. In the drawings, the shapes, dimensions, angles, positions, and the like of the constituent members are not necessarily accurate and are schematized for the purpose of explanation.

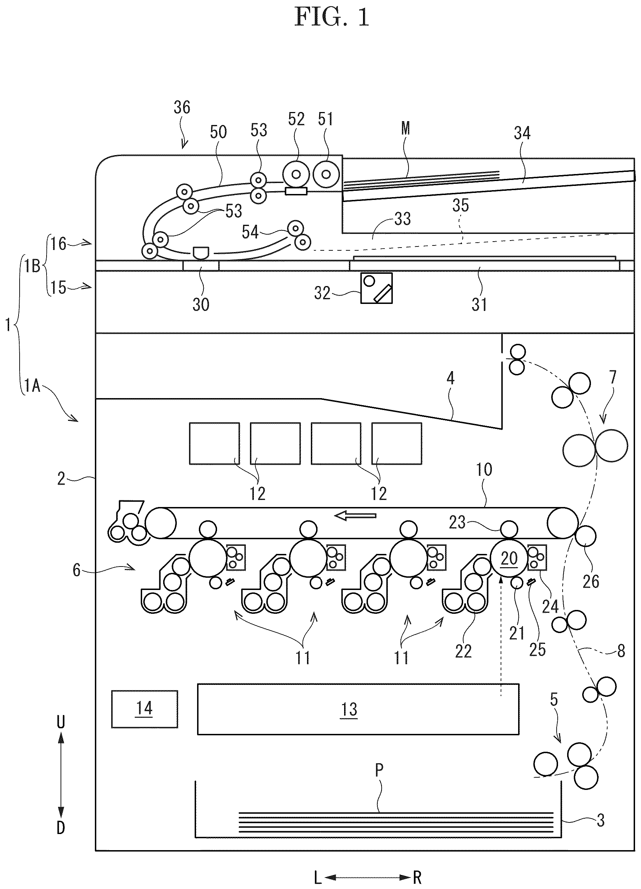

[Image Forming Apparatus] With reference to FIG. 1, the image forming apparatus 1 will be described. FIG. 1 is a cross-sectional view (front view) showing the internal structure of the image forming apparatus 1.

The image forming apparatus 1 includes an image forming device 1A which forms an image on a paper P by an electrophotographic method, and an image reading device 1B which optically reads an image of a document M and converts it into digital data. The image forming device 1A and the image reading device 1B are appropriately controlled by a control part 14.

[Image Forming Device] In the lower portion of the device main body 2 of the image forming device 1A, a paper feeding cassette 3 which stores a bundle of papers P is detachably attached. On the upper surface of the device main body 2, a paper discharge tray 4 on which the image-formed paper P is received is provided. Inside the device main body 2, a conveying path 8 along which the paper P is conveyed from the paper feeding cassette 3 to the paper discharge tray 4 is provided. Inside the device main body 2, a paper feeding part 5, an image forming part 6 and a fixing part 7 are provided. The paper feeding part 5 is provided on the upstream portion of the conveying path 8, and the fixing part 7 is provided on the downstream portion of the conveying path 8. The image forming part 6 is provided between the paper feeding part 5 and the fixing part 7. The paper P is not limited to a paper sheet, and may be a resin film or the like.

The image forming part 6 includes an intermediate transfer belt 10, four image forming units 11, four toner containers 12, and an exposure unit 13. The four image forming units 11 are arranged in a left-and-right direction below the intermediate transfer belt 10. The four toner containers 12 are provided above the intermediate transfer belt 10, and contain replenishment toner (developer) of four colors (yellow, magenta, cyan, and black). The exposure unit 13 is provided below the image forming units 11. Since the four image forming units 11 have the same configuration, one image forming unit 11 will be described below.

The image forming unit 11 includes a photosensitive drum 20, a charging device 21, a developing device 22, a primary transfer roller 23, a cleaning device 24, and a static eliminator 25. The photosensitive drum 20 is rotationally driven while being in contact with the intermediate transfer belt 10. The charging device 21, the developing device 22, the primary transfer roller 23, the cleaning device 24, and the static eliminator 25 are arranged around the photosensitive drum 20 in the order of the image forming process. The primary transfer roller 23 faces the photosensitive drum 20 across the intermediate transfer belt 10. A secondary transfer roller 26 is in contact with the right side portion of the intermediate transfer belt 10.

[Image Forming Process] The operation of the image forming device 1A will be described. The image forming device 1A forms an image on the paper P based on image data transmitted from an external terminal (personal computer or the like). The control part 14 controls the image forming device 1A based on the input image data, and the image forming process is executed as follows.

The charging device 21 charges the surface of the photosensitive drum 20. The exposure unit 13 performs exposure corresponding to the image data toward the photosensitive drum 20 and forms an electrostatic latent image on the surface of the photosensitive drum 20. The developing device 22 develops the electrostatic latent image on the photosensitive drum 20 into a toner image by using the toner supplied from the toner container 12. The toner images of the four colors carried on the four photosensitive drums 20 are sequentially and primarily transferred to the intermediate transfer belt 10 by the primary transfer rollers 23 to which a primary transfer bias is applied. Thus, a full-color toner image is formed on the surface of the intermediate transfer belt 10.

The paper P is fed from the paper feeding cassette 3 to the conveying path 8 by the paper feeding part 5, and the toner image carried on the intermediate transfer belt 10 is secondarily transferred to the paper P by the secondary transfer roller 26 to which a secondary transfer bias is applied. The toner image is thermally fixed to the paper P by the fixing part 7, and then the paper P is discharged to the paper discharge tray 4. The cleaning device 24 removes the toner remaining on the surface of the photosensitive drum 20, and the static eliminator 25 removes the charge of the photosensitive drum 20.

[Image Reading Device] As shown in FIG. 1, the image reading device 1B includes a reading part 15 and a document conveying device 16. The reading part 15 reads an image on a document M conveyed by the document conveying device 16. The document conveying device 16 is disposed on the reading part 15, and conveys the document M placed on a feeding tray 34 toward a discharge tray 35.

<Reading Part> The reading part 15 includes a contact glass 30, a platen glass 31, and an optical reading unit 32. The contact glass 30 is provided on the left side portion of the upper surface of a casing of the reading part 15, and the platen glass 31 is provided on the right side of the contact glass 30. The optical reading unit 32 stops at a position facing the contact glass 30, and optically reads the document M (image) conveyed on the contact glass 30 by the document conveying device 16. The optical reading unit 32 optically reads the document M (image) on the platen glass 31 while moving rightward from the position facing the contact glass 30.

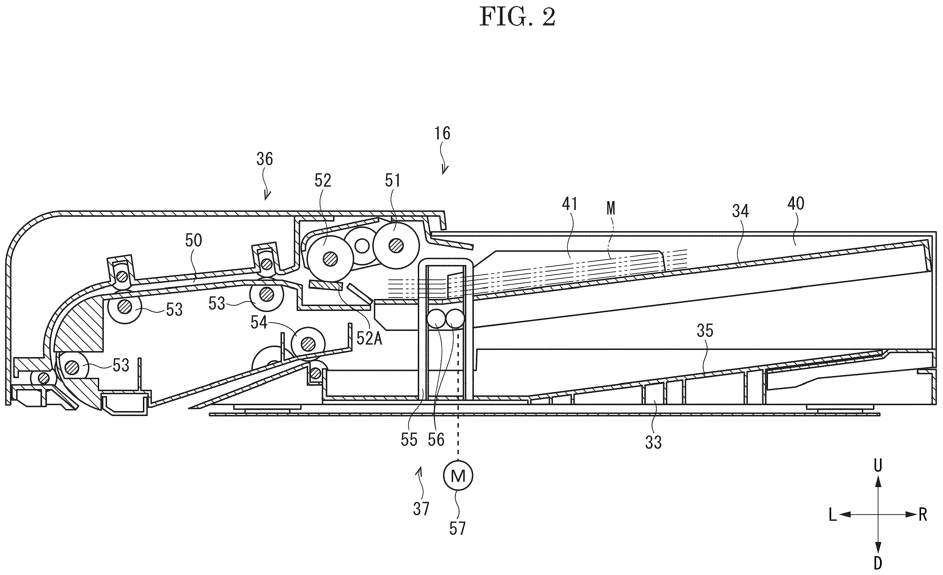

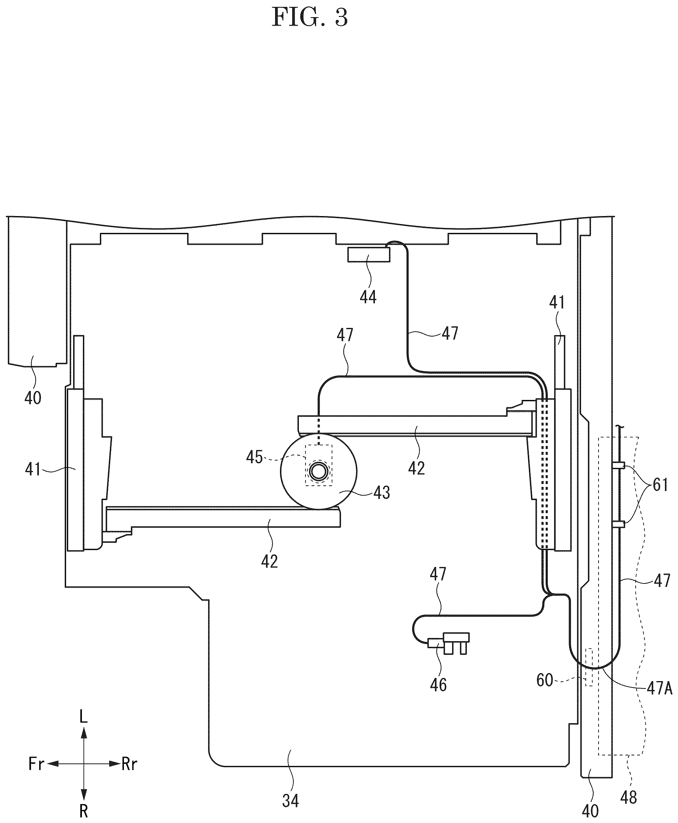

<Document Conveying Device> Next, the document conveying device 16 will be described with reference to FIG. 1 to FIG. 3. FIG. 2 is a cross-sectional view showing the document conveying device 16. FIG. 3 is a plan view showing the feeding tray 34.

As shown in FIG. 1 and FIG. 2, the document conveying device 16 includes a document pressing part 33, the feeding tray 34, the discharge tray 35, a conveying part 36, and a lifting part 37. The feeding tray 34 and the discharge tray 35 are provided on the right side portion of the document pressing part 33, and the conveying part 36 is provided on the left side portion of the document pressing part 33. In the following description, the "upstream" and "downstream" refer to the upstream and downstream in the conveying direction of the document M.

(Document Pressing Part) As shown in FIG. 1, the document pressing part 33 is formed so as to cover the respective glasses 30 and 31 of the reading part 15, and is turnably (openably/closably) attached to the rear portion of the upper surface of the device main body 2 via a hinge (not shown). When the front side portion of the document pressing part 33 is lifted (opened), the contact glass 30 and the platen glass 31 are exposed.

(Feeding Tray) As shown in FIG. 2, the feeding tray 34 extends diagonally upward and rightward from the conveying part 36. The documents M (bundles of the documents M) are placed on the feeding tray 34. The feeding tray 34 is supported by a support frame 40 so as to be lifted and lowered. The support frame 40 is formed by covering a pair of sheet metals erected at both the front and rear end portions of the document pressing part 33 with a resin sheath. For example, the front support frame 40 is provided on the left half of the document pressing part 33, and the rear support frame 40 is provided on the entire in the left-and-right direction of the document pressing part 33.

(Cursor) The feeding tray 34 is provided with a pair of cursors 41 for aligning both ends of the placed documents M in the front-and-rear direction (width direction). As shown in FIG. 3, the pair of cursors 41 are disposed on both sides of the feeding tray 34 in the front-and-rear direction. A pair of rack gears 42 extending toward the center in the front-and-rear direction are connected to the lower portions of the pair of cursors 41. The pair of rack gears 42 are meshed with a cursor gear 43, which is rotatably supported by the feeding tray 34 at approximately the center in the front-and-rear direction, move close to or away from each other both sides in the left-and-right direction. The pair of cursors 41 approach or separate from each other while rotating the cursor gear 43 through the pair of rack gears 42. By moving the pair of cursors 41 so as to abut them against both front and rear ends of the document M, the centers of the documents M and the feeding tray 34 in the front-and-rear direction are substantially aligned.

(Sensors, and the others) As shown in FIG. 3, the feeding tray 34 is provided with a document presence detection sensor 44, a document size detection sensor 45, and a document length detection sensor 46. The document presence detection sensor 44 is a reflection type optical sensor provided on the downstream side (left side) portion of the feeding tray 34, and detects the document M on the feeding tray 34. The document size detection sensor 45 is a volume sensor including the rotational shaft of the cursor gear 43, and detects the size (width) of the document M from an electric resistance value varying according to the position of the pair of cursors 41. The document length detection sensor 46 is a transmission type optical sensor provided on the upstream side (right side) portion of the feeding tray 34, and detects that the document M placed on the feeding tray 34 is large in size (for example, B4 size or larger). Specifically, an actuator (not shown) which is pushed down by the large-size document M placed on the feeding tray 34 is provided on the right side portion of the feeding tray 34, and the document length detection sensor 46 detects the pushed down actuator.

Each of these sensors 44 to 46 is electrically connected to an electrical board 48 via a cable 47. The cable 47 is a flexible cord formed by covering an electrical wire with an insulator. The three cables 47 extend from the three sensors 44 to 46 to the rear portion of the feeding tray 34, and are bundled together at the rear portion of the feeding tray 34. The electrical board 48 is provided on the rear support frame 40 and is electrically connected to the control part 14. The outputs (electrical signals) of the three sensors 44 to 46 are transmitted to the electrical board 48 through the cables 47, and from the electrical board 48 to the control part 14. The control part 14 determines the presence or absence of the document M on the feeding tray 34 based on the output of the document presence detection sensor 44, determines the size (width) of the document M on the feeding tray 34 based on the output of the document size detection sensor 45, and determines whether the document M on the feeding tray 34 is large in size based on the output of the document length detection sensor 46.

An example of "the first connection portion" described in the claims is the document presence detection sensor 44, the document size detection sensor 45, and the document length detection sensor 46. An example of "the first connection portion" need not be the three sensors 44 to 46, but may be at least one of the three sensors 44 to 46. The three sensors 44 to 46 are not limited to an optical sensor and a volume sensor, but may be a camera, a microswitch, or the like. An example of "the second connection portion" described in the claims is the electrical board 48, but this is not limited thereto, and may be the control part 14. Further, both the first connection portion and the second connection portion may be an electrical circuit board, or the first connection portion may be a power supply unit for supplying power to the electrical circuit board (the second connection portion) (neither of which is shown). That is, the first connection portion and the second connection portion may be any connection portion that can be electrically connected by the cable 47. Further, at least one cable 47 may be provided in accordance with the number of the first connection portion and the second connection portion. In the present specification, three cables 47 bundled together are treated as one and referred to simply as the cable 47.

(Discharge Tray) As shown in FIG. 2, the discharge tray 35 is disposed below the feeding tray 34 and above the document pressing part 33. Specifically, the upper surface of the document pressing part 33 disposed on the platen glass 31 is configured as the discharge tray 35 (see also FIG. 1). The discharge tray 35 receives the document M conveyed to the conveying part 36 and discharged. The discharge tray 35 is provided with a discharge sensor (for example, an optical sensor and the like) for detecting the documents M stacked thereon (not shown). The discharge sensor is electrically connected to the electrical board 48 (or the control part 14) via another cable (not shown).

(Conveying Part) As shown in FIG. 1, the conveying part 36 is provided on the left side portion of the document pressing part 33. A substantially U-shaped document conveying path 50 is formed inside the conveying part 36 so as to connect the feeding tray 34 to the discharge tray 35. The conveying part 36 feeds the documents M on the feeding tray 34 to the document conveying path 50 one by one, and discharges the documents M passed through the document conveying path 50 to the discharge tray 35.

As shown in FIG. 1 and FIG. 2, a pickup roller 51, a separation roller 52, a plurality of pairs of conveying rollers 53, and a pair of discharge rollers 54 are provided inside the conveying part 36. The pickup roller 51 is disposed above the upstream end portion of the document conveying path 50, and the separation roller 52 is provided on the downstream side of the pickup roller 51. The pickup roller 51 and the separation roller 52 are rotatably supported by the support frame 40. The pickup roller 51 is driven to rotate after being in contact with the document M on the feeding tray 34, and sends the document M to the document conveying path 50. The separation roller 52 conveys the document M while holding it between a separation plate 52A and the separation roller 52. The plurality of pairs of conveying rollers 53 are provided at intervals in a range downstream of the separation roller 52, and the pair of discharge rollers 54 is provided at the downstream end portion of the document conveying path 50. The pairs of conveying rollers 53 and the pair of discharge rollers 54 are rotatably supported by the support frame 40. In the pair of conveying rollers 53 and the pair of discharge rollers 54, one roller is driven to rotate, and the other roller rotates following the rotation of the one roller.

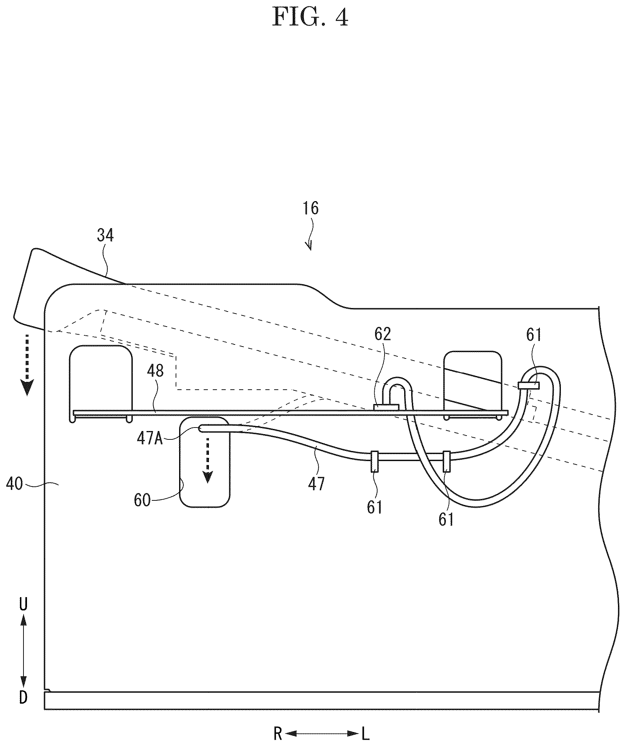

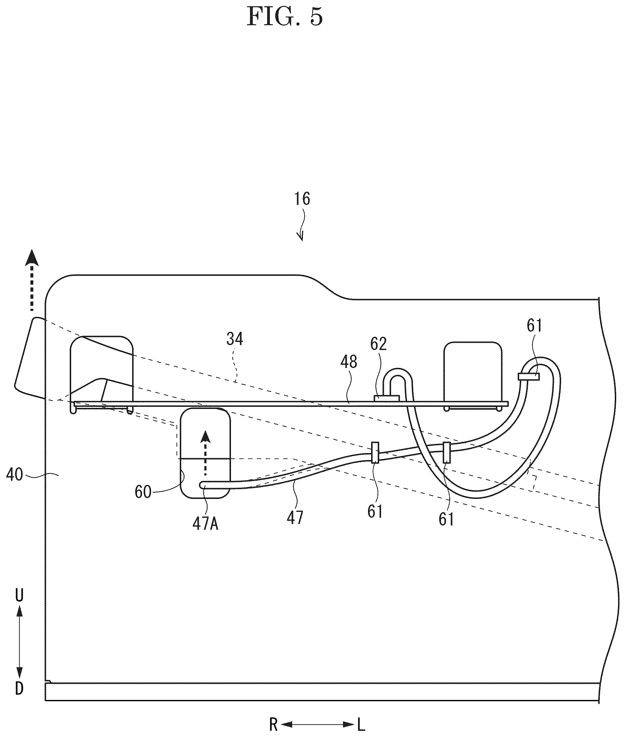

(Lifting Part) The lifting part 37 lifts and lowers the feeding tray 34 according to the thickness (height, number of documents) of the bundle of documents M placed on the feeding tray 34. The lifting part 37 lowers the feeding tray 34 (see FIG. 5, which will be described later) so that a large number of the documents M can be placed on the feeding tray 34. On the other hand, the lifting part 37 lifts the feeding tray 34 (see FIG. 4, which will be described later), so that a large number of the can be discharged to the discharge tray 35, and also it makes easy to take out the documents M discharged to the discharge tray 35.

As shown in FIG. 2, the lifting part 37 includes a pair of lifting racks 55, two pairs of lifting pinions 56, and a lifting motor 57. Since the pair of lifting racks 55 and the pair of lifting pinions 56 are symmetrical with respect to the feeding tray 34 in the front-and-rear direction, the specification will focus on one side (for example, the front side).

The lifting rack 55 is formed in a substantially inverted U-shape having internal teeth, and is fixed to the support frame 40. The pair of lifting pinions 56 are arranged in the left-and-right direction, supported by the feeding tray 34 so as to be rotatable around axes, and meshed with the internal teeth of the lifting rack 55. One of the pair of lifting pinions 56 is connected to the lifting motor 57 via a power transmission mechanism such as a gear train. The lifting motor 57 is electrically connected to the control part 14 via a drive circuit (not shown). When the lifting motor 57 rotates the lifting pinion 56 forward and backward, the pair of right and left lifting pinions 56 move in the upper-and-down direction while being meshed with the lifting rack 55. The feeding tray 34 is also lifted and lowered integrally with the pair of right and left lifting pinions 56. The lifting part 37 is provided with a lifting-restriction sensor (for example, an optical sensor) for detecting the upper limit position and the lower limit position of the feeding tray 34 in accordance with the height of the placed documents M and for preventing the feeding tray 34 from being excessively lifted and lowered (not shown) . The lifting-restriction sensor is electrically connected to the electrical board 48 (or the control part 14) via another cable (not shown).

Although the lifting part 37 is a mechanism including the lifting rack 55 and the lifting pinions 56, the present disclosure is not limited thereto. For example, the lifting part 37 may be a mechanism including a pulley and a wire, or a mechanism including a piston and a cylinder (not shown).

[Image Reading Process] With reference to FIG. 1 and FIG. 2, the operation of the image reading device 1B will be described. The document M set on the feeding tray 34 is formed in a sheet-like shape. On the other hand, the document M placed on the platen glass 31 is not limited to a sheet-like document, but may be a booklet, a card, or the like.

When the user sets the document M on the feeding tray 34 with the document pressing part 33 closed and inputs a reading instruction, the control part 14 controls the image reading device 1B, and the image reading process is executed as follows. The lifting part 37 lifts the feeding tray 34 and brings the document M on the feeding tray 34 close to (or in contact with) the pickup roller 51. The pickup roller 51 feeds the document M set on the feeding tray 34 to the document conveying path 50, and the separation roller 52 feeds the document M downstream one by one. The document M is conveyed on the contact glass 30 by the pairs of conveying rollers 53. The optical reading unit 32 reads an image of the document M passing on the contact glass 30. The pair of discharge rollers 54 discharges the document M passing through the contact glass 30 to the discharge tray 35.

Next, when the user opens the document pressing part 33, sets the document M on the platen glass 31, closes the document pressing part 33, and inputs a reading instruction, the control part 14 controls the image reading device 1B, and the image reading process is executed as follows. The optical reading unit 32 reads an image of the document M on the platen glass 31 while moving rightward.

The image data of the document M read as described above is stored in the storage part of the control part 14, and the control part 14 executes the image forming process described above or stores it in an external terminal.

Incidentally, in a configuration in which various sensors 44 to 46 provided in the feeding tray 34 and the electrical board 48 fixed to the support frame 40 are connected by the cable 47, when the feeding tray 34 is lifted and lowered, stress such as twisting or bending may occur on the cable 47. Such stress on the cable 47 causes disconnection or the like. Therefore, in the document conveying device 16 according to the present embodiment, a wiring structure of the cable 47 is adopted to reduce the stress applied to the cable 47 in conjunction with the lifting and lowering of the feeding tray 34.

[Cable Wiring Structure] With reference to FIG. 3 to FIG. 5, the wiring structure of the cable 47 will be described. FIG. 4 is a rear view showing a part of the feeding tray 34 disposed at the upper limit position. FIG. 5 is a rear view showing a part of the feeding tray 34 disposed at the lower limit position.

As shown in FIG. 3 and FIG. 4, the support frame 40 disposed on the rear side of the feeding tray 34 (one side in the width direction) has an opening 60 through which the cable 47 extending from the three sensors 44 to 46 (the first connection portion) to the electrical board 48 (the second connection portion) is passed in the front-and-rear direction (width direction). The opening 60 is formed to allow the cable 47 to be lifted and lowered in conjunction with the feeding tray 34. More specifically, as shown in FIG. 4, the opening 60 is formed in a substantially rectangular shape (more specifically, a rounded rectangular shape) whose long sides are along the upper-and-down direction. The dimensions of the opening 60 in the upper-and-down direction and the left-and-right direction are set sufficiently larger than the diameter (maximum outer diameter) of the cable 47 (more specifically, the bundle of cables 47).

As shown in FIG. 4, the opening 60 is formed below the electrical board 48 supported by the rear support frame 40. The opening 60 is formed below the lower surface of the feeding tray 34 disposed at the upper limit position. As shown in FIG. 5, the lower portion of the opening 60 is formed below the lower surface of the feeding tray 34 disposed at the lower limit position. That is, the opening 60 is configured such that the cable 47 passing through the opening 60 does not interfere with the feeding tray 34 disposed at the lower limit position.

The shape of the opening 60 is not limited to a rounded rectangular shape, but may be, for example, an elliptical shape (not shown). The opening 60 is not limited to a shape that is long in the upper-and-down direction, but may be, for example, square or circular (not shown). That is, the opening 60 may be formed to have a size that allows the cable 47 to be lifted and lowered. Further, it is preferable that the opening 60 is formed to have a size that allows the cable 47 to be moved in left-and-right direction.

The cable 47 extends from the three sensors 44 to 46 to the rear support frame 40 and passes through the opening 60 from the front side to the rear side (see FIG. 3). The cable 47 penetrates (passes through) the opening 60 in a substantially horizontal posture when viewed from the side (see FIG. 4). The cable 47 is curved (leftward) while penetrating (passing through) the opening 60 when viewed from a plane (see FIG. 3). That is, at least a part of the curved portion 47A of the cable 47 is disposed within the opening 60.

As shown in FIG. 4 and FIG. 5, the cable 47 extends leftward (one side in the conveying direction) along the outer surface (rear surface) of the support frame 40 after passing through the opening 60. More specifically, when the feeding tray 34 is disposed at the upper limit position, the cable 47 penetrating the opening 60 extends leftward while being slightly inclined downward (see FIG. 4). When the feeding tray 34 is disposed at the lower limit position, the cable 47 penetrating the opening 60 extends leftward while slightly inclined upward (see FIG. 5).

The cable 47 extends leftward, goes over the left end portion of the electrical board 48, and extends upward while being curved. The cable 47 extends upward while being curved, and then extends above the electrical board 48 in a loop shape while forming a slack downward. For example, a connector 62 is fixed to the terminal of the cable 47, and the connector 62 is connected to a socket (not shown) mounted on the upper surface of the electrical board 48. In this state, the three sensors 44 to 46 and the electrical board 48 are connected through the cable 47.

A plurality (for example, three) of wiring support members 61 are fixed to the outer surface (rear surface) of the support frame 40. Each wiring support member 61 is, for example, a synthetic resin component called a wire saddle, and has a function of holding the cable 47. Two of the three wiring support members 61 are provided below the electrical board 48 at intervals in the left-and-right direction, and support the cable 47 extending leftward (one direction in the conveying direction) from the opening 60. The remaining one wiring support member 61 is provided on the left side of the electrical board 48, and supports the cable 47 extending upward. Each wiring support member 61 does not tighten the cable 47 and supports the cable 47 while allowing the cable 47 to move (forward and rearward, leftward and rightward, and upward and downward). That is, each wiring support member 61 supports the cable 47 with a play (gap) between the wiring support member 61 and the cable 47.

[Effect of Cable Wiring Structure] As shown in FIG. 4 and FIG. 5, when the feeding tray 34 is lifted and lowered by the lifting part 37, the cable 47 is also lifted and lowered in conjunction with the feeding tray 34. Since the curved portion 47A of the cable 47 passes through the opening 60 in a substantially horizontal posture, it moves substantially in parallel in the upper-and-down direction. That is, the cable 47 moves substantially in parallel in the upper-and-down direction while maintaining the curvature of the curved portion 47A. Therefore, the cable 47 is not repeatedly bent and extended in conjunction with the lifting and lowering of the feeding tray 34, and the curvature of the curved portion 47A of the cable 47 is prevented from changing greatly. Therefore, the stress applied to the cable 47 lifted and lowered together with the feeding tray 34 can be reduced. As a result, problems such as disconnection of the cable 47 caused by the stress can be suppressed.

Further, since the cable 47 is movably supported by the wiring support members 61, it is possible to prevent the cable 47 lifted and lowered following the feeding tray 34 from being bent around the wiring support members 61. Thus, the stress applied to the cable 47 in conjunction with the lifting and lowering of the feeding tray 34 can be effectively reduced.

In the document conveying device 16 (the wiring structure of the cable 47) according to the present embodiment, the cable 47 passed through the opening 60 extends leftward, but this is not limited to this, and the cable may extend rightward (not shown).

Further, in the document conveying device 16 according to the present embodiment, the electrical board 48 and the opening 60 are provided in the rear support frame 40, but the present disclosure is not limited thereto and may be provided in the front support frame 40 (not shown).

In the document conveying device 16 of this embodiment, the opening 60 is formed below the electrical board 48, but the present disclosure is not limited thereto. The positions of the electrical board 48 and the opening 60 may be freely changed (not shown) under a condition that the lifting and lowering cable 47 does not interfere with the electrical board 48. Furthermore, although the terminal end side portion of the cable 47 is slackened in a turning manner, the present disclosure is not limited thereto. For example, the electrical board 48 is upright, and the terminal end of the cable 47, which extends horizontally after passing through opening 60, may be connected to electrical board 48 (not shown).

In the document conveying device 16 (the wiring structure of the cable 47) of this embodiment, the three wiring support members 61 support the cable 47, but the present disclosure is not limited to this. At least one wiring support member 61 may support the cable 47 extending from opening 60 in one direction of the conveying direction. Preferably, the wiring support member 61 may be provided near the opening 60 such that the cable 47 lifted and lowered in conjunction with the feeding tray 34 does not interfere with surrounding sheet metal, gears, and the like. Furthermore, for example, if the cable 47 is short, the wiring support member 61 may be omitted if unnecessary (not shown).

Furthermore, the description of this embodiment illustrates one example of applying the present disclosure to the image forming apparatus 1 (multifunctional peripheral). However, this is not limited thereto; the present disclosure may also be applied to, for example, a copying machine, a facsimile machine, or an image reading dedicated machine.

## Claims

1. A document conveying device (16) which conveys a document in a predetermined conveying direction, the document conveying device (16) comprising:
a feeding tray (34) on which the document is placed;
a support frame (40) which is disposed on at least one side of the feeding tray (34) in a width direction perpendicular to the conveying direction and supports the feeding tray (34) so as to be lifted and lowered; and
a cable (47) which electrically connects a first connection portion (44) provided on the feeding tray (34) and a second connection portion (48) provided on the support frame (40), wherein
the support frame (40) has an opening (60) for penetrating the cable (47) from the first connection portion (44) to the second connection portion (48) in the width direction,
the opening (60) is formed to allow the cable (47) to be lifted and lowered in conjunction with the feeding tray (34), and
the cable (47) passes through the opening (60), curves along an outer surface of the support frame (40), and extends in one side of the conveying direction.

2. The document conveying device (16) according to claim 1, comprising:
at least one wiring support member (61) which is fixed to the outer surface of the support frame (40) and supports the cable (47) extending in one side of the conveying direction while allowing the cable (47) to move.

3. The document conveying device (16) according to claim 1 or 2, wherein
the opening (60) has a shape elongated in an upper-and-lower direction, and is disposed lower than the second connection portion (48) and lower than a lower surface of the feeding tray (34) disposed at an upper limit position, and
a lower portion of the opening (60) is formed below the lower surface of the feeding tray (34) disposed at a lower limit position.

4. The document conveying device (16) according to any one of claims 1 to 3, wherein
the cable (47) has a curved portion (47A) passing through the opening (60) in a horizontal posture, and
the curved portion (47A) moves in parallel in the upper-and-lower direction as the feeding tray (34) is lifted and lowered.

5. An image reading device (1B) comprising:
the document conveying device (16) according to any one of claims 1 to 4, and
a reading part (15) which reads an image of the document conveyed by the document conveying device 816).

6. An image forming apparatus (1) comprising:
the image reading device (1B) according to claim 5.
